# EUROPÄISCHE PATENTSCHRIFT

(11) **EP 0 422 410 B1**
(45) Veröffentlichungstag und Bekanntmachung des Hinweises auf die Patenterteilung: **25.05.1994**
(21) Anmeldenummer: 90117721.2
(22) Anmeldetag: 14.09.1990
(51) Int. Cl.: B60R 22/28, F16F 7/12, B60R 22/00

(54) **Kraftbegrenzer für Sicherheitsgurt-Rückhaltesysteme**
Tension limiter for safety belt restraint systems
Limiteur de tension pour systèmes de retenue à ceinture de sécurité

(30) Priorität: 09.10.1989 DE 3933721
(43) Veröffentlichungstag der Anmeldung: 17.04.1991
(73) Patentinhaber: TRW REPA GMBH, 73553 Alfdorf (DE)
(72) Erfinder: Föhl, Artur, D-7060 Schorndorf (DE)
(74) Vertreter: Degwert, Hartmut, Dipl.-Phys.

(56) Entgegenhaltungen:
- DE-A- 2 349 891
- DE-A- 2 918 179
- US-A- 3 973 650
- US-A- 4 258 934

## Beschreibung

Die Erfindung betrifft einen Kraftbegrenzer für Sicherheitsgurt-Rückhaltesysteme, mit wenigstens einem Zylinder, an dem ein erster Beschlag angreift, und einer in dem Zylinder längsverschiebbar aufgenommenen Stange, an deren aus dem Zylinder herausragenden Ende ein zweiter Beschlag angreift, wobei der Kraftbegrenzer über den ersten und den zweiten Beschlag in den Kraftflußweg des Sicherheitsgurtsystems eingefügt ist, wobei in einem ringförmigen Freiraum, der radial innen durch die Stange, radial außen durch die Innenwandung des Zylinders und axial auf wenigstens einer Seite durch eine Ringschulter begrenzt ist, mehrere Wälzkörper in Umfangsrichtung gleichmäßig verteilt angeordnet sind und wobei die Materialeigenschaften des Zylinders und der Durchmesser der Wälzkörper so aufeinander abgestimmt sind, daß die Stange und der Zylinder unter Zuglast zwischen den Beschlägen entgegen einer reproduzierbar definierten Hemmkraft und unter Verrichtung von Verformungsarbeit an der Innenwandung des Zylinders sowie Bildung von Längsrillen durch Eindringen der Wälzkörper in das Material des Zylinders auseinandergezogen werden.

Ein solcher Kraftbegrenzer mit einer zwei Beschläge verbindenden Kolben/Zylinder-Anordnung ist aus der DE-A-23 49 891 bekannt. Eine in einen Zylinder eingreifende Stange ist an ihrem einen, in den Zylinder hineinragenden Ende mit einem Kolbenteil versehen. In diesem ist eine ringförmige, bereichsweise kegelförmig ausgebildete Ausnehmung eingebracht, die Wälzkörper beinhaltet. Die Wälzkörper werden bei einer Bewegung des Kolbenteils der Stange entgegen der Strafferrichtung durch den kegelförmigen Bereich der Ausnehmung in die Wandung des Zylinders eingedrückt. Dadurch werden Belastungsspitzen im Sicherheitsgurtsystem abgebaut und so die Fahrzeuginsassen vor hohen Beschleunigungswerten bewahrt. Durch die Verformung des Materials der Zylinderwandung mittels der in diese eindringenden Wälzkörper können hohe Energiebeträge umgesetzt werden. Die Umsetzung der aus dem Gurtsystem eingeleiteten Energienverformungsarbeit zur Deformierung und zur plastischen Verformung des Materials der Zylinderwandung erfolgt über den gesamten Hub der Stange gleichmäßig, indem gleichmäßig tiefe Längsrillen an der Innenseite der Zylinderwandung gebildet werden. Jeder einzelne Wälzkörper setzt dem Auseinanderziehen von Zylinder und Stange eine gut beherrschbare Hemmkraft entgegen, die unter Leistung von Verformungsarbeit überwunden wird.

Der Erfindung liegt die Aufgabe zugrunde, einen Kraftbegrenzer der eingangs angegebenen Art anzugeben, der sich durch eine geringe Baugröße auszeichnet und leicht in übliche Sicherheitsgurtrückhaltesysteme integriert werden kann.

Diese Aufgabe wird bei einem Kraftbegrenzer der eingangs angegebenen Art erfindungsgemäß dadurch gelöst, daß zwei parallele Zylinder im Abstand voneinander an den Rändern einer Beschlagplatte gebildet sind und die aus den Zylindern herausragenden Enden der zugehörigen Stangen durch einen Bügel verbunden sind, an dem der zweite Beschlag befestigt ist. Dadurch wird eine besonders gedrängte Bauform erreicht, da die Aufteilung der Kraftbegrenzung auf zwei Zylinder zu einer flachen Bauform führt, bei der jeder einzelne Zylinder einen kleineren Durchmesser hat als der einzelne Zylinder gemäß dem eingangs angegebenen Stand der Technik.

Bei der bevorzugten Ausführungsform sind die Wälzkörper Stahlkugeln, während der Zylinder aus einem Material wie Aluminium oder eine Aluminiumlegierung besteht. Für die Wälzkörper wird also vorzugsweise ein hartes Material verwendet, während für die Zylinderwandung ein relativ weiches Material verwendet wird, das plastisch leicht verformbar ist.

Weitere Merkmale und Vorteile der Erfindung ergeben sich aus der folgenden Beschreibung und aus der Zeichnung, auf die Bezug genommen wird. In der Zeichnung zeigen:
- Fig. 1: eine Perspektivansicht einer Ausführungsform des Kraftbegrenzers und
- Fig. 2: eine auseinandergezogene Perspektivansicht zur Veranschaulichung der Ausbildung des in Fig. 2 gezeigten Kraftbegrenzers.

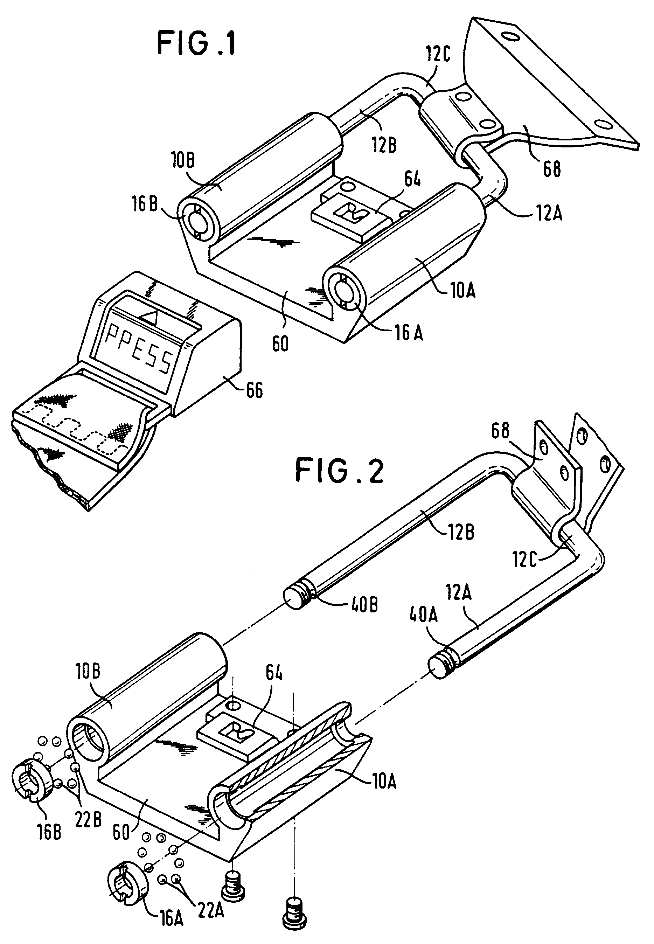

Die in Fig. 1 gezeigte Ausführungsform des Kraftbegrenzers eignet sich besonders für ein Passiv-Sicherheitsgurtsystem. An einer Beschlagplatte 60 sind zwei Zylinder 10A, 10B parallel zueinander und entlang den Seitenrändern der Beschlagplatte 60 angeordnet. Aus jedem Zylinder 10A, 10B ragt eine Stange 12A, 12B heraus. Der Außendurchmesser der Stange 12A, 12B ist kleiner als der Innendurchmesser der Zylinderbohrung. Die Stangen 12A, 12B sind an ihrem im Zylinder 10A, 10B aufgenommenen Ende jeweils mit einem aufgeschraubten Kopfstück 16A, 16B versehen. Der Kopf 16A, 16B ist mit geringem Spiel in einem erweiterten Bohrungsabschnitt des Zylinders 10A, 10B aufgenommen, der über eine Stufe oder Schulter in die Zylinderbohrung übergeht. Am Ende der Stange 12A, 12B ist jeweils eine umlaufende Rille 40A, 40B vorgesehen. In dieser sind eine Anzahl von Wälzkörpern 22A, 22B in Umfangsrichtung gleichmäßig verteilt angeordnet. Bei der gezeigten Ausführungsform sind insgesamt acht Wälzkörper 22A, 22B vorhanden, die als Stahlkugeln ausgebildet sind und in Umfangsrichtung zumindest annähernd aneinander angrenzen. An ihrem gegenüberliegenden Ende sind die Stangen 12A, 12B durch einen allgemein U-förmigen Bügel 12C miteinander verbunden, der bei der bevorzugten Ausführungsform einteilig mit diesen Stangen ausgebildet ist. Zwischen den Zylindern 10A, 10B ist an der Beschlagplatte 60 eine Einsteckzunge 64 befestigt und eine Schiebebahn für ein kleines Gurtschloß 66 gebildet. An dem Bügel 12C ist ein Beschlagteil 68 angeschlossen, von dem die Figuren 1 und 2 jeweils eine Variante zeigen.

Der beschriebene Kraftbegrenzer wird über die Beschlagplatte 60 und das an der Stange 12A, 12B befestigte Beschlagteil 68 in den Kraftfluß eines Sicherheitsgurt-Rückhaltesystems eingefügt. Wenn über die beiden Beschläge eine hohe Zugspannung zwischen der Stange 12A, 12B und dem Zylinder 10A, 10B aufgebracht wird, dringen die Wälzkörper 22A, 22B in das Material der Innenwandung des Zylinders 10A, 10B ein und drücken dieses radial auswärts und axial in Zugrichtung, so daß parallele Längsrillen an der Innenseite der Zylinderbohrung gebildet werden. Diese Längsrillen können eine Tiefe von einigen Zehntel Millimeter aufweisen. Es findet sowohl eine plastische Verformung von Material als auch eine Deformierung des Zylinders 10A, 10B statt. Bei diesem Vorgang wird, bevor die Wälzkörper 22A, 22B an einer Ringschulter arretiert werden, ein erheblicher, aus dem Gurtsystem eingeleiteter Energiebetrag in Verformungsarbeit umgesetzt. Zugleich werden Belastungsspitzen im Gurtsystem abgebaut, so daß ein flacher Kraftverlauf erzielt und der Fahrzeuginsasse vor hohen Beschleunigungen beschützt wird.

Der Zylinder 10A, 10B kann auch aus einem härteren Material als Aluminium bestehen, beispielsweise aus einem relativ dünnen Stahlrohr, wenn die Wälzkörper 22A, 22B aus gehärtetem Stahl sind. Bei einer solchen Materialwahl wird ein größerer Anteil an Deformierungsarbeit und ein relativ kleinerer Anteil an Arbeit zur plastischen Verformung verrichtet.

Bei der erfindungsgemäßen Ausführungsform nach den Figuren 1 und 2 wird eine besonders gedrängte Bauform erreicht, da die Aufteilung der Kraftbegrenzung auf zwei Zylinder zu einer flachen Bauform führt.

## Patentansprüche

1. Kraftbegrenzer für Sicherheitsgurt-Rückhaltesysteme, mit wenigstens einem Zylinder (10A, 10B), an dem ein erster Beschlag angreift, und einer in dem Zylinder (10A, 10B) längsverschiebbar aufgenommenen Stange (12A, 12B), an deren aus dem Zylinder (10A, 10B) herausragenden Ende ein zweiter Beschlag angreift, wobei der Kraftbegrenzer über den ersten und den zweiten Beschlag in den Kraftflußweg des Sicherheitsgurtsystems eingefügt ist, in einem ringförmigen Freiraum, der radial innen durch die Stange (12A, 12B), radial außen durch die Innenwandung des Zylinders (10A, 10B) und axial auf wenigstens einer Seite durch eine Ringschulter (16A, 16B) begrenzt ist, mehrere Wälzkörper (22) in Umfangsrichtung gleichmäßig verteilt angeordnet sind und die Materialeigenschaften des Zylinders (10A, 10B) und der Durchmesser der Wälzkörper (22A, 22B) so aufeinander abgestimmt sind, daß die Stange (12A, 12B) und der Zylinder (10A, 10B) unter Zuglast zwischen den Beschlägen entgegen einer reproduzierbar definierten Hemmkraft und unter Verrichtung von Verformungsarbeit an der Innenwandung des Zylinders (10A, 10B) sowie Bildung von Längsrillen durch Eindringen der Wälzkörper (22A, 22B) in das Material des Zylinders (10A, 10B) auseinandergezogen werden, **dadurch gekennzeichnet**, daß zwei parallele Zylinder (10A, 10B) im Abstand voneinander an den Rändern einer Beschlagplatte (60) gebildet sind und die aus den Zylindern (10A, 10B) herausragenden Enden der zugehörigen Stangen (12A, 12B) durch einen Bügel (12C) verbunden sind, an dem der zweite Beschlag (68) befestigt ist.

2. Kraftbegrenzer nach Anspruch 1, **dadurch gekennzeichnet**, daß die Wälzkörper (22) Stahlkugeln sind und der Zylinder aus einem Material wie Aluminium oder eine Al-Legierung besteht.

3. Kraftbegrenzer nach Anspruch 1 oder 2, **dadurch gekennzeichnet**, daß der Zylinder (10A, 10B) an seinem dem ersten Beschlag benachbarten Ende einen gegenüber der Zylinderbohrung erweiterten Bohrungsabschnitt aufweist, dessen Innendurchmesser etwa dem Außendurchmesser der durch die unbelasteten Wälzkörper (22A, 22B) gebildeten Ringanordnung entspricht und der über eine Stufe oder Schulter in die Zylinderbohrung übergeht.

4. Kraftbegrenzer nach einem der vorstehenden Ansprüche, **dadurch gekennzeichnet**, daß an der Beschlagplatte (60) eine Einsteckzunge (64) befestigt ist und zwischen den Zylindern (10A, 10B) eine Schiebebahn für ein auf die Steckzunge aufsteckbares Gurtschloß (66) gebildet ist.

## Claims

1. Force limiter for safety belt restraining systems comprising at least one cylinder (10A, 10B) on which a first fitting engages and a rod (12A, 12B) which is longitudinally displaceably accommodated in the cylinder (10A, 10B) and on the end of which projecting out of the cylinder (10A, 10B) a second fitting engages, the force limiter being inserted via the first and second fitting into the force flow path of the safety belt system, in an annular free space defined radially inwardly by the rod (12A, 12B), radially outwardly by the inner wall of the cylinder (10A, 10B) and axially on at least one side by an annular shoulder (16A, 16B) a plurality of roller elements (22) being arranged uniformly distributed in the peripheral direction and the material properties of the cylinder (10A, 10B) and the diameter of the roller elements (20A, 20B) being adapted to each other in such a manner that the rod (12A, 12B) and the cylinder (10A, 10B) under tensile load between the fittings are pulled apart against a reproduceably defined inhibiting force and with performance of deformation work on the inner wall of the cylinder (10A, 10B) and formation of longitudinal grooves by penetration of the roller elements (20A, 20B) into the material of the cylinder (10A, 10B),
characterized in that two parallel cylinders (10A, 10B) are formed spaced apart at the edges of a fitting plate (60) and the ends of the associated rods (12A, 12B) projecting out of the cylinders (10A, 10B) are connected by a stirrup member (12C) to which the second fitting (68) is secured.

2. Force limiter according to claim 1, characterized in that the roller elements (22) are steel balls and the cylinder consists of a material such as aluminium or an aluminium alloy.

3. Force limiter according to claim 1 or 2, characterized in that the cylinder (10A, 10B) comprises at its end adjacent the first fitting a bore portion which is widened with respect to the cylinder bore, the inner diameter of which corresponds substantially to the outer diameter of the annular arangement formed by the unloaded roller elements (22A, 22B) and which merges via a step or shoulder into the cylinder bore.

4. Force limiter according to any one of the preceding claims, characterized in that to the fitting plate (60) an insert tongue (64) is secured and between the cylinders (10A, 10B) a slide path for a belt lock (66) adapted to be pushed onto the insert tongue is formed.

## Revendications

1. Limiteur de force pour systèmes de retenue à ceinture de sécurité, comprenant au moins un cylindre (10A, 10B) sur lequel agit une première ferrure, ainsi qu'une tige (12A, 12B) logée coulissante dans le cylindre (10A, 10B) et sur l'extrémité de laquelle, qui ressort du cylindre, agit une seconde ferrure, le limiteur de tension étant inséré par les première et seconde ferrures dans la voie du flux de force du système de la ceinture de sécurité, dans un espace libre annulaire défini radialement vers l'intérieur par la tige (12A, 12B), radialement vers l'extérieur par la paroi interne du cylindre (10A, 10B), et axialement au moins sur un côté, par un épaulement annulaire (16A, 16B), plusieurs corps de roulement (22) étant répartis uniformément dans la direction de la circonférence, et les caractéristiques du matériau du cylindre (10A, 10B) et le diamètre des corps de roulement (20A, 20B) sont accordées de manière que la tige (12A, 12B) et le cylindre (10A, 10B) soient amenés à s'écarter l'un de l'autre sous un effort de traction exercé entre les ferrures à l'encontre d'une force reproductible et définie de ralentissement et sous l'effet de l'accomplissement d'un travail de déformation sur la paroi interne du cylindre (10A, 10B) ainsi que de la formation de rainures longitudinales par pénétration des corps de roulement (20A, 20B) dans le matériau du cylindre (10A, 10B), caractérisé en ce que deux cylindres parallèlles (10A, 10B) sont formés à distance l'un de l'autre sur les bords d'une plaque de ferrure (60) et les extrémités des tiges correspondantes (12A, 12B) ressortant des cylindres (10A, 10B) sont reliées par un étrier (12C) auquel la seconde ferrure (68) est fixée.

2. Limiteur de force selon la revendication 1, caractérisé en ce que les corps de roulement (22) sont des billes d'acier et le cylindre est en un matériau tel que l'aluminium ou un alliage d'aluminium.

3. Limiteur de force selon la revendication 1 ou 2, caractérisé en ce que le cylindre (10A, 10B) comporte, à l'extrémité voisine de la première ferrure, une partie d'alésage qui est plus large que l'alésage cylindrique, dont le diamètre intérieur correspond sensiblement au diamètre extérieur de l'ensemble annulaire formé par les corps de roulement (22A, 22B) qui ne sont pas sous charge, et qui ressort par un gradin ou un épaulement dans l'alésage cylindrique.

4. Limiteur de force selon l'une des revendications précédentes, caractérisé en ce qu'une languette d'enfichage (64) est fixée à la plaque de ferrure (60) et un chemin de coulissement destiné à un verrou (66) de ceinture s'emboîtant sur la languette d'enfichage, est formé entre les cylindres (10A, 10B).
